(19) Europäisches Patentamt
European Patent Office
Office européen des brevets

(11) EP 3 878 885 A1

(12) EUROPÄISCHE PATENTANMELDUNG

(43) Veröffentlichungstag:
**15.09.2021 Patentblatt 2021/37**

(21) Anmeldenummer: **20161952.5**

(22) Anmeldetag: **10.03.2020**

(51) Int Cl.:
***C08G 18/48*** *(2006.01)* ***C08G 64/18*** *(2006.01)*
***C08G 64/34*** *(2006.01)* ***C08G 65/26*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

# (54) VERFAHREN ZUR HERSTELLUNG VON POLYETHERCARBONATPOLYOLEN

(57) Die vorliegende Erfindung betrifft ein Verfahren zur Herstellung von Polyethercarbonatpolyolen durch Anlagerung von Alkylenoxid und Kohlendioxid an eine H-funktionelle Startersubstanz in Anwesenheit eines DMC-Katalysators oder eines Metallkomplexkatalysators auf Basis der Metalle Cobalt und/oder Zink, wobei
(γ) Alkylenoxid und Kohlendioxid an eine H-funktionelle Startersubstanz in einem Reaktor in Anwesenheit eines DMC-Katalysators oder eines Metallkomplexkatalysators auf Basis der Metalle Cobalt und/oder Zink angelagert werden, dadurch gekennzeichnet, dass das Alkylenoxid einen Anteil von 5 bis 50 Gew.-% Ethylenoxid, bezogen auf das Gesamtgewicht des eingesetzten Alkylenoxids, enthält und die Anlagerung unter Kohlendioxid-haltiger Atmosphäre durchgeführt wird.

EP 3 878 885 A1

## Beschreibung

Die vorliegende Erfindung betrifft ein Verfahren zur Herstellung von Polyethercarbonatpolyolen, die Polyethercarbonatpolyole erhältlich nach diesem Verfahren sowie die Verwendung dieser Polyethercarbonatpolyole in der Herstellung von Polyurethan-Kunststoffen, insbesondere Polyurethan-Schaumstoffen.
Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

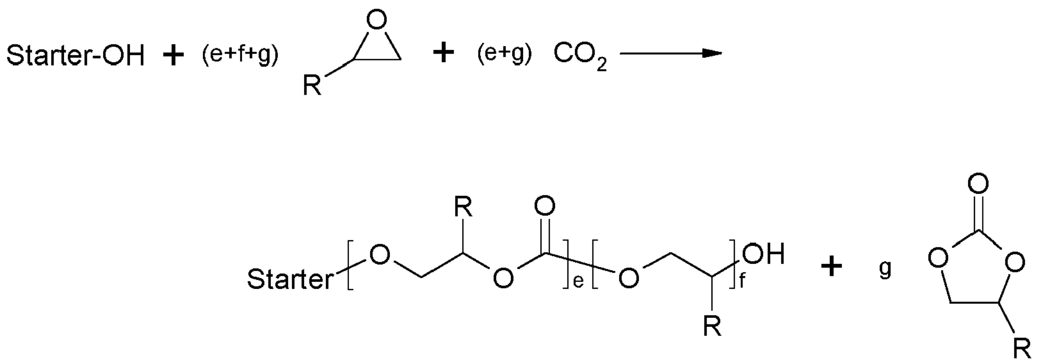

(I)

WO-A 2001/044347 offenbart ein Verfahren zur DMC-katalysierten Herstellung von Polyetherpolyolen, bei dem eine gemeinsame Dosierung von mindestens zwei verschiedenen Epoxiden erfolgt, wobei während der gemeinsamen Dosierung das Mengenverhältnis der Epoxide zueinander im Gemisch verändert wird.
WO-A 2008/058913 offenbart ein Verfahren zur Herstellung von Polyurethan-Weichschaumstoffen unter Einsatz von mittels DMC-Katalyse hergestellten Polyethercarbonatpolyolen, wobei die Polyethercarbonatpolyole bevorzugt am Kettenende einen Block aus reinen Alkylenoxideinheiten, insbesondere reinen Propylenoxideinheiten aufweisen.
WO-A 2014/072336 offenbart ein Verfahren zur DMC-katalysierten Herstellung von Polyethercarbonatpolyolen. Es werden dabei in einem ersten Schritt Polyethercarbonatpolyole hergestellt und in weiteren Schritten mit Mischungen aus Propylenoxid und Ethylenoxid kettenverlängert, wobei der Anteil an Ethylenoxid jeweils erhöht wird.
Aufgabe der vorliegenden Erfindung ist die Bereitstellung eines Verfahrens zur Herstellung von Polyethercarbonatpolyolen mit einem erhöhten Anteil an primären OH-Gruppen.
Überraschend wurde gefunden, dass die erfindungsgemäße Aufgabe gelöst wird durch ein Verfahren zur Herstellung von Polyethercarbonatpolyolen durch Anlagerung von Alkylenoxid und Kohlendioxid an eine H-funktionelle Startersubstanz in Anwesenheit eines DMC-Katalysators oder eines Metallkomplexkatalysators auf Basis der Metalle Cobalt und/oder Zink, wobei
($\gamma$) Alkylenoxid und Kohlendioxid an eine H-funktionelle Startersubstanz in einem Reaktor in Anwesenheit eines DMC-Katalysators oder eines Metallkomplexkatalysators auf Basis der Metalle Cobalt und/oder Zink angelagert werden,
dadurch gekennzeichnet, dass das Alkylenoxid einen Anteil von 5 bis 50 Gew.-% Ethylenoxid, bezogen auf das Gesamtgewicht des eingesetzten Alkylenoxids, enthält und die Anlagerung unter Kohlendioxid-haltiger Atmosphäre durchgeführt wird.
In einer besonderen Ausführungsform führt das erfindungsgemäße Verfahren zusätzlich zu Polyethercarbonatpolyolen mit einer reduzierten Viskosität.

<u>Zu Schritt ($\alpha$):</u>

Bei dem erfindungsgemäßen Verfahren kann zunächst H-funktionelle Startersubstanz und/oder ein Suspensionsmittel, das keine H-funktionellen Gruppen enthält, im Reaktor vorgelegt werden, vorzugsweise wird eine Teilmenge

der H-funktionellen Startersubstanz vorgelegt. Anschließend wird die für die Polyaddition benötigte Menge an Katalysator in den Reaktor gegeben. Die Reihenfolge der Zugabe ist dabei nicht entscheidend. Es kann auch erst der Katalysator und anschließend das Suspensionsmittel in den Reaktor gefüllt werden. Alternativ kann auch erst der Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Als erfindungsgemäß eingesetzte Suspensionsmittel sind ebenfalls geeignet aliphatische Lactone, aromatische Lactone, Lactide, cyclische Carbonate mit mindestens drei gegebenenfalls substituierten Methylengruppen zwischen den Sauerstoffatomen der Carbonatgruppe, aliphatische cyclische Anhydride und aromatischen cyclische Anhydride.

Aliphatische oder aromatische Lactone in Sinne der Erfindung sind cyclische Verbindungen enthaltend eine Esterbindung im Ring, vorzugsweise

4-gliedrige Ringlactone wie β-Propiolacton, β-Butyrolacton, β-Isovalerolacton, β-Caprolacton, β-Isocaprolacton, β-Methyl-β-valerolacton,

5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,

6-gliedrige Ringlactone, wie δ-Valerolacton, 1,4-Dioxan-2-on, Dihydrocumarin, 1H-1sochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano [3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,

7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*, 7*S*)-5-Methyl-7-(propan-2-yl)oxepan-2-on, 4-Methyl-7-(propan-2-yl)oxepan-2-on,

höhergliedrige Ringlactone, wie (7*E*)-Oxacycloheptadec-7-en-2-on.

Besonders bevorzugt ist ε-Caprolacton und Dihydrocumarin.

Lactide in Sinne der Erfindung sind cyclische Verbindungen enthaltend zwei oder mehr Esterbindungen im Ring, vorzugsweise Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Cyclische Carbonate mit mindestens drei gegebenenfalls substituierten Methylengruppen zwischen den Sauerstoffatomen der Carbonatgruppe sind vorzugsweise Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Anhydride sind vorzugsweise Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbomendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Suspensionsmittel kann auch eine Mischung aus zwei oder mehreren der genannten Suspensionsmittel eingesetzt werden. Höchst bevorzugt wird in Schritt (α) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäureanhydrid, Maleinsäureanhydrid und Phthalsäureanhydrid eingesetzt.

In einer Ausführungsform der Erfindung wird in Schritt (α) ein Suspensionsmittel, das keine H-funktionellen Gruppen enthält, im Reaktor gegebenenfalls gemeinsam mit Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge der H-funktionellen Startersubstanz(en) sowie gegebenenfalls Katalysator im Reaktor vorgelegt werden.

Der Katalysator wird vorzugsweise in einer Menge eingesetzt, so dass der Gehalt an Katalysator im nach Schritt (γ) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in Schritt (α) in das resultierende Gemisch (i) aus einer Teilmenge der H-funktionellen Startersubstanz und/oder Suspensionsmittel und (ii) Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird in Schritt (α) das resultierende Gemisch (i) aus einer Teilmenge der H-funktionellen Startersubstanz(en) und/oder Suspensionsmittel und (ii) Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-1) eine Teilmenge der H-funktionellen Startersubstanz und/oder Suspensionsmittel vorgelegt und

(α-II) die Temperatur der Teilmenge der H-funktionellen Startersubstanz und/oder des Suspensionsmittels auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Katalysator zur Teilmenge der H-funktionellen Startersubstanz und/oder Suspensionsmittel in Schritt (α-I) oder unmittelbar anschließend in Schritt (α-II) zugesetzt wird, und wobei das Suspensionsmittel keine H-funktionellen Gruppen enthält.

Zu Schritt (β)

Schritt (β) dient der Aktivierung des DMC-Katalysators und bezieht sich somit auf die Ausführungsform des erfindungsgemäßen Verfahrens in Gegenwart eines DMC-Katalysators. Dieser Schritt (β) wird bevorzugt unter einer Kohlendioxid-Atmosphäre durchgeführt. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von

Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung des Alkylenoxids (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von Alkylenoxid 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben.

Zu Schritt (γ)

Erfindungsgemäß wird Alkylenoxid enthaltend einen Anteil von 5 bis 50 Gew.-%, bezogen auf das Gesamtgewicht des eingesetzten Alkylenoxids, an die H-funktionelle Startersubstanz unter Kohlendioxid-haltiger Atmosphäre angelagert. Das Alkylenoxid kann dabei als Gemisch zudosiert werden oder als einzelne Bestandteile.

Die Dosierung des Kohlendioxids, des Alkylenoxids und gegebenenfalls auch der H-funktionellen Startersubstanz kann simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxid auf einmal oder kontinuierlich zugegeben werden. Hierbei ist zu berücksichtigen, dass in wenigsten einem der Schritte (α) und (γ) H-funktionelle Startersubstanz eingesetzt wird. Der hier verwendete Begriff "kontinuierlich" kann als Modus der Zugabe eines Reaktanden so definiert werden, dass eine für die Terpolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung von Alkylenoxid und/oder von H-funktioneller Startersubstanz erfolgt simultan oder sequentiell zur Kohlendioxid-Dosierung. Es ist möglich, Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Die Dosierung des Alkylenoxids bzw. der H-funktionellen Startersubstanz kann simultan oder sequentiell (portionsweise) über jeweils separate Dosierungen (Zugaben) erfolgen oder über eine oder mehrere Dosierungen, wobei das Alkylenoxid bzw. die H-funktionelle Startersubstanz einzeln oder als Gemisch dosiert werden können. Über die Art und/oder Reihenfolge der Dosierung der H-funktionellen Startersubstanz und des Alkylenoxids ist es möglich, statistische, alternierende, blockartige oder gradientenartige Polyethercarbonatpolyole zu synthetisieren.

In einer bevorzugten Ausführungsform wird in Schritt (γ) die Dosierung der H-funktionellen Startersubstanz zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck (absolut) (im Sinne der Erfindung ist der Gesamtdruck (absolut) definiert als die Summe der Partialdrücke des eingesetzten Alkylenoxids und Kohlendioxids) bei den jeweiligen Reaktionsbedingungen festgelegt werden. Als Gesamtdruck (absolut) hat sich der Bereich von 2,5 bis 100 bar, bevorzugt 4 bis 50 bar, besonders bevorzugt von 8 bis 30 bar für die Terpolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell das Alkylenoxid verbraucht wird. Die Menge des Kohlendioxids (angegeben als Druck) kann bei der Zugabe des Alkylenoxids ebenso variieren. $CO_2$ kann auch als Feststoff in den Reaktor gegeben werden und dann unter den gewählten Reaktionsbedingungen in den gasförmigen Zustand übergehen.

Eine bevorzugte Ausführungsform des erfindungsgemäßen Verfahrens ist unter anderem dadurch gekennzeichnet, dass in Schritt (γ) die Gesamtmenge der H-funktionellen Startersubstanz zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Terpolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im Allgemeinen sehr langsam. Bei Temperaturen oberhalb von 150°C steigt die Menge an unerwünschten Nebenprodukten stark an.

Die Dosierung des Alkylenoxids, der H-funktionellen Startersubstanz und des Katalysators kann über separate oder gemeinsame Dosierstellen erfolgen. In einer bevorzugten Ausführungsform werden Alkylenoxid und H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids das Alkylenoxid genügend schnell abreagiert. Die Konzentration an freien Alkylenoxid in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxid in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierten DMC-Katalysator enthaltende Mischung in demselben Reaktor weiter mit Alkylenoxid, H-funktioneller Startersubstanz und Kohlendioxid umgesetzt. In einer weiteren bevorzugten Ausführungsform wird die gemäß den Schritten (α) und (β) resultierende aktivierten DMC-Katalysator enthaltende Mischung in einem anderen Reaktionsbehältnis (beispielsweise einem Rührkessel, Rohrreaktor oder Schlaufenreaktor) weiter mit Alkylenoxid, H-funktioneller Startersubstanz und Kohlendioxid umgesetzt.

Bei Reaktionsführung in einem Rohrreaktor werden die gemäß den Schritten (α) und (β) resultierende aktivierten DMC-Katalysator enthaltende Mischung, der H-funktionellen Startersubstanz, Alkylenoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern. Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxid in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Terpolymerisation als auch eine kontinuierliche Zugabe einer H-funktionellen Startersubstanz umfasst.

Gegenstand der Erfindung ist daher auch ein Verfahren, wobei in Schritt (γ) H-funktionelle Startersubstanz, Alkylenoxid, sowie Katalysator in Gegenwart von Kohlendioxid ("Terpolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der Katalysator in H-funktioneller Startersubstanz suspendiert kontinuierlich zugegeben.

Beispielsweise wird für das kontinuierliche Verfahren zur Herstellung der Polyethercarbonatpolyole gemäß den Schritten (α) und (β) eine aktivierte DMC-Katalysator-enthaltende Mischung hergestellt, dann werden gemäß Schritt (γ)

(γ1) jeweils eine Teilmenge an H-funktioneller Startersubstanz, Alkylenoxid und Kohlendioxid zudosiert zum Initiieren der Terpolymerisation, und

(γ2) während des Fortschreitens der Terpolymerisation jeweils die verbleibende Menge an DMC-Katalysator, H-funktionelle Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben, wobei die Menge vorzugsweise so gewählt ist, dass der Gehalt an DMC-Katalysator in dem bei Schritt (γ) resultierenden Reaktionsprodukt 10 bis 10000 ppm, besonders bevorzugt 20 bis 5000 ppm und höchst bevorzugt 50 bis 500 ppm beträgt. Vorzugsweise werden die Schritte (α) und (β) in einem ersten Reaktor durchgeführt, und das resultierende Reaktionsgemisch dann in einen zweiten Reaktor für die Terpolymerisation gemäß Schritt (γ) überführt. Es ist aber auch möglich, die Schritte (α), (β) und (γ) in einem Reaktor durchzuführen.

Zu Schritt (δ)

Gemäß dem optionalen Schritt (δ) kann das in Schritt (γ) erhaltene Reaktionsgemisch, welches im allgemeinen einen Gehalt von 0,05 Gew.-% bis 10 Gew.-% Alkylenoxid enthält, im Reaktor einer Nachreaktion unterzogen werden oder es kann kontinuierlich in einen Nachreaktor zur Nachreaktion überführt werden, wobei im Wege der Nachreaktion der Gehalt an freiem Alkylenoxid reduziert wird. In Schritt (δ) wird im Wege der Nachreaktion der Gehalt an freiem Alkylenoxid bevorzugt auf weniger als 0,5 g/l, besonders bevorzugt auf weniger als 0,1 g/l im Reaktionsgemisch reduziert. Wenn das in Schritt (γ) erhaltene Reaktionsgemisch im Reaktor verbleibt, wird vorzugsweise das Reaktionsgemisch zur Nachreaktion 10 min bis 24 h bei einer Temperatur von 60 bis 140 °C, besonders bevorzugt 1 h bis 12 h bei einer Temperatur von 80 bis 130 °C gehalten. Vorzugsweise wird das Reaktionsgemisch dabei gerührt bis der Gehalt an freiem Alkylenoxid auf weniger als 0,5 g/l, besonders bevorzugt auf weniger als 0,1 g/l im Reaktionsgemisch gesunken ist. Durch die Abreaktion von freiem Alkylenoxid und ggf. Kohlendioxid sinkt der Druck im Reaktor während der Nachreaktion im Schritt (δ) im Allgemeinen ab, bis ein konstanter Wert erreicht ist.
Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.
Als Nachreaktor wird bevorzugt ein Rohrreaktor eingesetzt, wobei beispielsweise ein einzelner Rohrreaktor oder auch eine Kaskade von mehreren, parallel angeordneten oder linear hintereinander geschalteten Rohrreaktoren verwendet werden kann. Bevorzugt liegt die Verweilzeit im Rohrreaktor dabei zwischen 5 min und 10 h, besonders bevorzugt zwischen 10 min und 5 h.

DMC-Katalysator:

Es ist bevorzugt für das erfindungsgemäße Verfahren als Katalysator einen DMC-Katalysator einzusetzen.
DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.
Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.
Die in den DMC-Katalysatoren enthaltenen Doppelmetallcyanid-Verbindungen sind die Reaktionsprodukte wasserlöslicher Metallsalze und wasserlöslicher Metallcyanidsalze. Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.
Zur Herstellung der Doppelmetallcyanid-Verbindungen geeignete Metallsalze besitzen bevorzugt die allgemeine Formel (II),

$M(X)_n$ (II)

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$M_r(X)_3$ (III)

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$M(X)_s$ (IV)

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$M(X)_t$ (V)

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_aM'(CN)_b(A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und

M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische

Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (beispielsweise mit einer wässrigen Lösung des ungesättigten Alkohols) gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden (beispielsweise ungesättigten Alkohols) in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischen Komplexliganden (beispielsweise ungesättigter Alkohol) und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Nach der Durchführung des erfindungsgemäßen Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifizierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der

Rückgewinnung des DMC-Katalysators.

Der DMC-Katalysator kann mit Hilfe verschiedener Methoden weitestgehend oder vollständig entfernt werden: Der DMC-Katalysator kann zum Beispiel mit Hilfe der Membranfiltration (Nano-, Ultra- oder Querstromfiltration), mit Hilfe der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption, Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC-Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm bevorzugt 100 mm bis 200 mm beschichtet ("Pre-Coat"). Die Abtrennung der Mehrheit der Feststoffphase (bestehend z.B. aus Adsorbens und DMC-Katalysator) erfolgt dabei an der Oberfläche der Pre-Coat Schicht in Kombination mit einer Tiefenfiltration der kleineren Teilchen innerhalb der Pre-Coat Schicht. Die Temperatur des zu filtrierenden Rohprodukts liegt dabei im Bereich 50°C bis 120°C, bevorzugt 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 $\mu$m/min - 500 $\mu$m/min, bevorzugt im Bereich 50 $\mu$m/min - 150 $\mu$m/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein. Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \cdot h)$ bis 5 $m^3/(m^2 \cdot h)$zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Terpolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

Alkylenoxid:

Erfindungsgemäß enthält das Alkylenoxid einen Anteil von 5 bis 50 Gew.-% Ethylenoxid, bezogen auf das Gesamtgewicht des eingesetzten Alkylenoxids. Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1 -Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3 -Glycidyloxypropyltripropoxysilan, 3 -Glycidyloxypropyl-methyldimethoxysilan, 3-Glycidyl-oxypropyl-ethyldiethoxysilan, 3-Glycidyloxypropyltriisopropoxysilan.

Vorzugsweise enthält das Gemisch zusätzlich zu Ethylenoxid als Alkylenoxide 1-Butenoxid, und/oder Propylenoxid, insbesondere Propylenoxid.

Der Anteil an Ethylenoxid im Alkylenoxid beträgt bevorzugt 5 bis 40 Gew.-%, besonders bevorzugt 12 bis 32 Gew.-%, jeweils bezogen auf das Gesamtgewicht des eingesetzten Alkylenoxids.

H-funktionelle Startersubstanz:

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als mono-H-funktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin.

Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.
Die H-funktionellen Startersubstanzen können auch aus der Substanzklasse der Polyetherpolyole ausgewählt sein, die ein Molekulargewicht Mn im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.
Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.
Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.
In einer weiteren Ausführungsform der Erfindung können Polyethercarbonatpolyole als H-funktionelle Startersubstanzen eingesetzt werden. Diese als H-funktionelle Startersubstanzen eingesetzten Polyethercarbonatpolyole werden hierzu in einem separaten Reaktionsschritt zuvor hergestellt.
Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.
Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.
Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

Komponente K

Als Komponente K geeignete Verbindungen sind dadurch gekennzeichnet, dass sie mindestens eine Phosphor-Sauerstoff-Bindung enthalten. Als Komponente K geeignet sind beispielsweise Phosphorsäure sowie Phosphorsäuresalze, Phosporsäurehalogenide, Phosphorsäureamide, Phosphorsäureester und Salze der Mono- und Diester der Phosphorsäure.
Unter den unter Komponente K zuvor und nachfolgend genannten Estern werden im Sinne der Erfindung jeweils die Alkylester, Arylester und/oder Alkarylester-Derivate verstanden.
Als Phosphorsäureester sind beispielsweise geeignet Mono-, Di- oder Triester von Phosphorsäure, Mono-, Di-, Tri- oder Tetraester von Pyrophosphorsäure und Mono-, Di-, Tri-, Tetra- oder Polyester von Polyphosphorsäure und Alkoholen mit 1 bis 30 C-Atomen. Als Komponente K sind beispielsweise die folgenden Verbindungen geeignet: Phosphorsäuretriethylester, Phosphorsäurediethylester, Phosphorsäuremonoethylester, Phosphorsäuretripropylester, Phosphorsäuredipropylester, Phosphorsäuremonopropylester, Phosphorsäuretributylester, Phosphorsäuredibutylester, Phosphorsäuremonobutylester, Phosphorsäuretrioctylester, Phosphorsäuretris(2-ethylhexyl)ester, Phosphorsäuretris-(2-butoxyethyl)ester, Phosphorsäurediphenylester, Phosphorsäuredikresylester, Fructose-1,6-bisphosphat, Glucose-1-phosphat, Phosphorsäure-bis-(dimethylamid)-chlorid, Phosphorsäure-bis-(4-nitrophenyl)-ester, Phosphorsäure-cyclopropylmethyl-diethyl-ester, Phosphorsäure-dibenzylester, Phosphorsäurediethyl-3 -butenylester, Phosphorsäure-dihexadecylester, Phosphorsäure-diisopropylester-chlorid, Phosphorsäure-diphenylester, Phosphorsäure-diphenylester-chlorid, Phosphorsäure-2-hydroxyethylmethacrylatester, Phosphorsäure-mono-(4-chlorphenylester)-dichlorid,

Phosphorsäure-mono-(4-nitrophenylester)-dichlorid, Phosphorsäure-monophenylester-dichlorid, Phosphorsäuretridecylester, Phosphorsäure-trikresylester, Phosphorsäure-trimethylester, Phosphorsäuretriphenylester, Phosphorsäuretripyrolidid, Phosphorsulfochlorid, Phosphorsäure-dichloriddimethylamid, Phosphorsäuredichlorid-methylester, Phosphorylbromid, Phosphorylchlorid, Phosphorylchinolinchlorid Calciumsalz und O-Phosphorylethanolamin, Alkali- und Ammoniumdihydrogenphosphate, Alkali-, Erdalkali- und Ammoniumhydrogenphosphate, Alkali-, Erdalkali- und Ammoniumphosphate.

Unter Ester der Phosphorsäure (Phosphorsäureester) werden auch die durch Propoxylierung der Phosphorsäure erhältlichen Produkte verstanden (bspw. erhältlich als Exolit® OP 560).

Als Komponente K geeignet sind auch Phosphonsäure und Phosphorige Säure sowie Mono- und Diester der Phosphonsäure sowie Mono-, Di- und Triester der Phosphorigen Säure sowie jeweils deren Salze, Halogenide und Amide.

Als Phosphonsäureester sind beispielsweise geeignet Mono- oder Diester von Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren und Cyanphosphonsäuren oder Mono-, Di-, Tri- oder Tetraester von Alkyldiphosphonsäuren und Alkoholen mit 1 bis 30 C-Atomen. Als Phosphorigsäureester sind beispielsweise geeignet Mono-, Di- oder Triester der Phosphorigen Säure und Alkoholen mit 1 bis 30 C-Atomen. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure, Octadecylphosphonsäure sowie deren Mono- und Dimethylester, -ethylester, -butylester, -ethylhexylester oder -phenylester, Butylphosphonsäuredibutylester, Phenylphosphonsäuredioctylester, Phosphonoameisensäuretriethylester, Phosphonoessigsäuretrimethylester, Phosphonoessigsäuretriethylester, 2-Phosphonopropionsäuretrimethylester, 2-Phosphonopropionsäuretriethylester, 2-Phosphonopropionsäuretripropylester, 2-Phosphonopropionsäuretributylester, 3 -Phosphonopropionsäuretriethylester, 2-Phosphonobuttersäure-triethylester, 4-Phosphonocrotonsäuretriethylester, (12-Phosphonododecyl)-phosphonsäure, Phosphonoessigsäure, Phosphonoessigsäure-P,P-bis-(2,2,2-trifluorethyl)-methylester, Phosphonoessigsäure-P,P-diethyl-trimethylsilylester, Phosphonoessigsäure-P,P-dimethyl-tert. -butylester, Phosphonoessigsäure-P,P-dimethylester Kaliumsalz, Phosphonoessigsäure-P,P-dimethylethylester, 16-Phosphonohexadecansäure, 6-Phosphonohexansäure, N-(Phosphonomethyl)-glycin, N-(Phosphonomethyl)-glycin-monoisopropylaminsalz, N-(Phosphonomethyl)-iminodiessigsäure, (8-Phosphono-octyl)-phosphonsäure, 3-Phosphonopropionsäure, 11-Phosphonoundecansäure, Phosphonsäure-pinakolester, Trilaurylphosphit, Tris-(3 -ethyloxethanyl-3 -methyl)phosphit, Heptakis(dipropylenglykol)phosphit, Phosphorigsäure-bis-(diisopropylamid)-2-cyanethylester, Phosphorigsäure-bis-(diisopropylamid)-methylester, Phosphorigsäuredibutylester, Phosphorigsäure-(diethylamid)-dibenzylester, Phosphorigsäure-(diethylamid)-ditertiärbutylester, Phosphorigsäure-diethylester, Phosphorigsäure-(diisopropylamind)-diallylester, Phosphorigsäure-(diisopropylamid)-dibenzylester, Phosphorigsäure-(diisopropylamid)-di-tert. -butylester, Phosphorigsäure-(diisopropylamid)-dimethylester, Phosphorigsäure-(dimethylamid)-dibenzylester, Phosphorigsäuredimethylester, Phosphorigsäure-dimethyltrimethylsilylester, Phosphorigsäure-diphenylester, Phosphorigsäure-methylesterdichlorid, Phosphorigsäure-mono-(2-cyanethylester)-diisopropylamid-chlorid, Phosphorigsäure-(o-phenylen-ester)-chlorid, Phosphorigsäure-tributylester, Phosphorigsäure-triethylester, Phosphorigsäuretriisopropylester, Phosphorigsäure-triphenylester, Phosphorigsäure-tris-(tert.-butyl-dimethylsilyl)-ester, Phosphorigsäure-(tris-1,1,1,3,3,3-hexafluor-2-propyl)-ester, Phosphorigsäure-tris-(trimethylsilyl)-ester, Phosphorigsäure-dibenzylester. Unter Ester der Phosphorigen Säure werden auch die durch Propoxylierung der Phosphorigen Säure erhältlichen Produkte verstanden (bspw. erhältlich als Exolit® OP 550).

Als Komponente K geeignet sind auch Phosphinsäure, Phosphonigsäure und Phosphinigsäure sowie jeweils deren Ester. Als Phosphinsäureester sind beispielsweise geeignet Ester von Phosphinsäure, Alkylphosphinsäuren, Dialkylphosphinsäuren oder Arylphosphinsäuren und Alkoholen mit 1 bis 30 C-Atomen. Als Phosphonigsäureester sind beispielsweise geeignet Mono- und Diester von Phosphonigsäure oder Arylphosphonigsäure und Alkoholen mit 1 bis 30 C-Atomen. Das beinhaltet beispielsweise Diphenylphosphinsäure oder 9,10-Dihydro-9-Oxa-10-Phosphaphenanthren-10-Oxid.

Die als Komponente K geeigneten Ester der Phosphorsäure, Phosphonsäure, Phosphorigen Säure, Phosphinsäure, Phosphonigsäure oder Phosphinigsäure werden in der Regel durch Umsetzung von Phosphorsäure, Pyrophosphorsäure, Polyphosphorsäuren, Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren, Cyanphosphonsäure, Alkyldiphosphonsäuren, Phosphonigsäure, Phosphorige Säure, Phosphinsäure, Phosphinigsäure oder deren Halogenderivaten oder Phosphoroxiden mit Hydroxyverbindungen mit 1 bis 30 C-Atomen wie Methanol, Ethanol, Propanol, Butanol, Pentanol, Hexanol, Heptanol, Octanol, Nonanol, Dekanol, Dodekanol, Tridekanol, Tetradekanol, Pentadekanol, Hexadekanol, Heptadekanol, Octadekanol, Nonadekanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxypropionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit erhalten.

Als Komponente K geeignete Phosphinoxide enthalten eine oder mehrere Alkyl-, Aryl oder Aralkylgruppen mit 1 - 30 C-Atomen, die an den Phosphor gebunden sind. Bevorzugte Phosphinoxide haben die allgemeine Formel $R_3P=O$ wobei

R eine Alkyl-, Aryl oder Aralkylgruppe mit 1 - 20 C-Atomen ist. Geeignete Phosphinoxide sind beispielsweise Trimethylphosphinoxid, Tri(n-butyl)phosphinoxid, Tri(n-octyl)phosphinoxid, Triphenylphosphinoxid, Methyldibenzylphosphinoxid und deren Mischungen.

Des Weiteren sind als Komponente K geeignet Verbindungen des Phosphors, die durch Reaktion mit OH-funktionellen Verbindungen (wie bspw. Wasser oder Alkoholen) eine oder mehrere P-O-Bindung(en) ausbilden können. Beispielsweise kommen als solche Verbindungen des Phosphors in Frage Phosphor-(V)-sulfid, Phosphortribromid, Phosphortrichlorid und Phosphortriiodid. Es können auch beliebige Mischungen der vorgenannten Verbindungen als Komponente K eingesetzt werden. Besonders bevorzugt ist Komponente K Phosphorsäure.

Komponente K kann in einem belieben Schritt des Verfahrens zudosiert werden. Vorteilhaft ist es, die Komponente K in Schritt (γ) zuzudosieren, insbesondere wenn in Schritt (γ) H-funktionelle Startersubstanz zudosiert wird. Vorteilhaft ist es auch, Komponente K in Schritt (δ) dem Reaktionsgemisch im Nachreaktor zuzugegeben. Vorteilhaft ist es außerdem, die Komponente K erst nach der Nachreaktion (Schritt (δ)) dem erhaltenen Reaktionsgemisch zuzugeben.

In einer möglichen Ausführungsform der Erfindung wird während der Nachreaktion (Schritt (δ)) Komponente K in einer Menge von 5 ppm bis 1000 ppm, besonders bevorzugt 10 ppm bis 500 ppm, höchst bevorzugt 20 ppm bis 200 ppm, jeweils bezogen auf das in Schritt (γ) erhaltene Reaktionsgemisch, zugegeben. Die Komponente K wird während der Nachreaktion besonders bevorzugt bei einem Gehalt an freiem Alkylenoxid von 0,1 g/l bis 10 g/l, höchst bevorzugt von 1 g/l bis 10 g/l Alkylenoxid und besonders höchst bevorzugt von 5 g/l bis 10 g/l zugegeben. Bei der Durchführung des erfindungsgemäßen Verfahrens mit Verwendung eines Rohrreaktors zur Nachreaktion in Schritt (δ) wird die Komponente K besonders bevorzugt in der zweiten Hälfte der Wegstrecke zudosiert, die das Reaktionsgemisch im Rohrreaktor durchläuft.

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

## Experimenteller Teil

Beispiele

Die vorliegende Erfindung wird anhand der nachfolgenden Beispiele weiter erläutert. Für die Beispiele wurde ein DMC-Katalysator, hergestellt gemäß Beispiel 6 in WO 01/80994 A1, eingesetzt und ein difunktionelles Polyetherpolyol mit einer OH-Zahl von 260 mg KOH/g als H-funktionelle Startersubstanz verwendet.

Messmethoden:

Die Viskosität wurde mittels Rotationsviskometer (Physica MCR501 der Fa. Anton Paar) in Anlehnung an die Vorschrift DIN 53019 (aus dem Jahr 2008) mit einem Platte-Platte-Messsystem (25 mm Durchmesser) bei 25°C und einer Scherrate von 403 Hz ermittelt.

Der Anteil an eingebautem $CO_2$ im resultierenden Polyethercarbonatpolyol ($CO_2$-Gehalt) wurde mittels $^1$H-NMR auf einem Spektrometer der Firma Bruker (AV400, 400 MHz) bestimmt. Die Proben wurden jeweils in deuteriertem Chloroform gelöst. Die relevanten Resonanzen im $^1$H-NMR (bezogen auf $CDCl_3$ = 7.26 ppm) sind wie folgt:

- F(I): Fläche der Resonanz bei 1,17 - 0,90 ppm entspricht 3 H-Atomen der Polypropylenoxid(PPO)-Einheiten im Polyol
- F(II): Fläche der Resonanz bei 1,34 - 1,17 ppm entspricht 3 H-Atomen der Polypropylencarbonat(PPC)-Einheiten im Polyol
- F(III): Fläche der Resonanz bei 3,80 - 3,04 ppm entspricht 3 H-Atomen der PPO-Einheiten und 4 H-Atomen der Polyethylenoxid(PEO)-Einheiten im Polyol
- F(IV): Fläche der Resonanz bei 4,33 - 4,13 ppm entspricht 2 H-Atomen der Polyethylencarbonat(PEC)-Einheiten im Polyol

Die Bestimmung der relativen Molenanteile (x) im Polyol ergibt sich wie folgt:

- $$x(PPO) = F(I) / 3$$
- $$x(PPC) = F(II) / 3$$

- $$x(PEO) = (F(III)-F(I)) / 4$$
- $$x(PEC) = F(IV) / 2$$

Die so ermittelte Zusammensetzung des Polyols wird anschließend in Gewichtsteile umgerechnet und auf 100 normiert. Zur Umrechnung werden folgende Molmassen verwendet: PPO = 58,08 g/mol, PPC = 102,09 g/mol, PEO = 44,05 g/mol, PEC = 88,06 g/mol. Der $CO_2$-Gehalt wird dann über die Anteile der Carbonat Einheiten und der Molmasse von $CO_2$ (44,01 g/mol) berechnet:

$$\text{gew.\%}(CO2) = gew.\%(PPC)\frac{44{,}01}{102{,}09} + gew.\%\,(PEC)\frac{44{,}01}{88{,}06}$$

Zur Bestimmung der Anteile der primären OH-Gruppen wurden 0,2 g Polyol mit 1 mL Trifluoressigsäureanhydrid versetzt und über Nacht bei 35 °C gerührt. Anschließend wurden alle volatilen Verbindungen unter Hochvakuum (< 1mbar) entfernt und das funktionalisierte Polyol mittels $^{19}$F-NMR charakterisiert. Das Signal im Bereich von -74,897 ppm bis 75,191 ppm ist Trifluoressigsäure, welche mit einer primären OH-Gruppe verestert wurde, zuzuschreiben, während das Signal im Bereich von -75,266 ppm bis 75,481 ppm, Trifluoressigsäure die mit einer sekundären OH-Gruppe verestert wurde zuzuschreiben ist. Über das Verhältnis der Integrale zueinander lässt sich dann der jeweilige Anteil bestimmen.

**Beispiel 1a: Herstellung eines Polyetherpolyols durch Copolymerisation von EO und PO mit einem EO/PO-Gewichtsverhältnis von 30/70**

($\alpha$) In einem 300 mL Druckreaktor mit Gas- und Flüssigkeitsdosierungseinrichtungen wurden 27,6 mg nicht aktivierter DMC-Katalysator in 30 g H-funktioneller Startersubstanz suspendiert. Die Suspension wurde unter Rühren (1000 U/min) auf 130 °C erhitzt und es wurde zusätzlich bei 50 mbar Druck über ein Tauchrohr ein Argon-Strom durchgeleitet.
($\beta$) Anschließend wurde 2,5 bar Argon aufgepresst und der Katalysator aktiviert. Hierfür wurden Pulsartig (5 mL/min) 3 x 3 g der Alkylenoxidmischung mit einem EO/PO-Gewichtsverhältnis von 30/70 zugegeben. Zwischen den Pulsen wurde jeweils 10 min gewartet, bis die Alkylenoxide vollständig abreagiert haben.
($\gamma$) Danach wurde die Temperatur auf 100 °C gesenkt. Mit einer Dosiergeschwindigkeit von 2 mL/min wurden die restlichen 99 g der Alkylenoxidmischung mit einem EO/PO-Gewichtsverhältnis von 30/70 innerhalb von 1 h zugegeben. Nach beendeter Alkylenoxidzugabe wurde noch 2 h nachgerührt um sicher zu stellen, dass alle Alkylenoxide abreagiert sind. Anschließend wurde der Reaktor entspannt und auf Raumtemperatur abgekühlt.

Um Nebenprodukte zu entfernen wurde das hergestellte Polyetherpolyol mittels Dünnschichtverdampfer bei 130 °C aufgereinigt. Die Ergebnisse der Viskositätsmessung und der Bestimmung der primären OH-Gruppen sind in Tabelle 1 dargestellt.

**Beispiel 1b: Herstellung eines Polyetherpolyols durch Copolymerisation von EO und PO mit einem EO/PO-Gewichtsverhältnis von 20/80**

Das Verfahren wurde entsprechend zu Beispiel 1a durchgeführt, wobei eine Alkylenoxidmischung mit einem EO/PO-Gewichtsverhältnis von 20/80 eingesetzt wurde.

**Beispiel 1c: Herstellung eines Polyetherpolyols durch Copolymerisation von EO und PO mit einem EO/PO-Gewichtsverhältnis von 10/90**

Das Verfahren wurde entsprechend zu Beispiel 1a durchgeführt, wobei eine Alkylenoxidmischung mit einem EO/PO-Gewichtsverhältnis von 10/90 eingesetzt wurde.

**Beispiel 2a: Herstellung eines Polyethercarbonatpolyols durch Terpolymerisation von $CO_2$, EO und PO mit einem EO/PO-Gewichtsverhältnis von 30/70 und einem $CO_2$-Druck von 5 bar**

(α) In einem 300 mL Druckreaktor mit Gas- und Flüssigkeitsdosierungseinrichtungen wurden 27,6 mg nicht aktivierter DMC-Katalysator in 30 g H-funktioneller Startersubstanz suspendiert. Die Suspension wurde unter Rühren (1000 U/min) auf 130 °C erhitzt und es wurde zusätzlich bei 50 mbar Druck über ein Tauchrohr ein Argon-Strom durchgeleitet.

(β) Anschließend wurde 2,5 bar Argon aufgepresst und der Katalysator aktiviert. Hierfür wurden Pulsartig (5 mL/min) 3 x 3 g der Alkylenoxidmischung zugegeben. Zwischen den Pulsen wurde jeweils 10 min gewartet, bis die Alkylenoxide vollständig abreagiert haben.

(γ) Danach wurde die Atmosphäre auf $CO_2$ (5 bar) gewechselt und die Temperatur auf 100 °C gesenkt. Mit einer Dosiergeschwindigkeit von 2 mL/min wurden die restlichen 99 g der Alkylenoxidmischung, innerhalb von 1 h zugegeben. Der Verlauf der Reaktion konnte unter anderem mittels $CO_2$-Verbrauch beobachtet werden, wobei durch kontinuierliche Nachdosierung von $CO_2$ der Druck im Reaktor konstant gehalten wurde. Nach beendeter Alkylenoxidzugabe wurde noch 2 h nachgerührt um sicher zu stellen, dass alle Alkylenoxide abreagiert sind. Anschließend wurde der Reaktor entspannt und auf Raumtemperatur abgekühlt.

Um Nebenprodukte zu entfernen wurde das hergestellte Polyethercarbonatpolyol mittels Dünnschichtverdampfer bei 130 °C aufgereinigt. Die Ergebnisse der Viskositätsmessung und der Bestimmung der primären OH-Gruppen sind in Tabelle 1 dargestellt.

**Beispiel 2b: Herstellung eines Polyethercarbonatpolyols durch Terpolymerisation von $CO_2$, EO und PO mit einem EO/PO-Gewichtsverhältnis von 20/80 und einem $CO_2$-Druck von 5 bar**

Das Verfahren wurde entsprechend zu Beispiel 2a durchgeführt, wobei eine Alkylenoxidmischung mit einem EO/PO-Gewichtsverhältnis von 20/80 eingesetzt wurde.

**Beispiel 2c: Herstellung eines Polyethercarbonatpolyols durch Terpolymerisation von $CO_2$, EO und PO mit einem EO/PO-Gewichtsverhältnis von 10/90 und einem $CO_2$-Druck von 5 bar**

Das Verfahren wurde entsprechend zu Beispiel 2a durchgeführt, wobei eine Alkylenoxidmischung mit einem EO/PO-Gewichtsverhältnis von 10/90 eingesetzt wurde.

**Beispiel 3a: Herstellung eines Polyethercarbonatpolyols durch Terpolymerisation von $CO_2$, EO und PO mit einem EO/PO-Gewichtsverhältnis von 30/70 und einem $CO_2$-Druck von 10 bar**

(α) In einem 300 mL Druckreaktor mit Gas- und Flüssigkeitsdosierungseinrichtungen wurden 27,6 mg nicht aktivierter DMC-Katalysator in 30 g H-funktioneller Startersubstanz suspendiert. Die Suspension wurde unter Rühren (1000 U/min) auf 130 °C erhitzt und es wurde zusätzlich bei 50 mbar Druck über ein Tauchrohr ein Argon-Strom durchgeleitet.

(β) Anschließend wurde 2,5 bar Argon aufgepresst und der Katalysator aktiviert. Hierfür wurden Pulsartig (5 mL/min) 3 x 3 g der Alkylenoxidmischung zugegeben. Zwischen den Pulsen wurde jeweils 10 min gewartet, bis die Alkylenoxide vollständig abreagiert haben.

(γ) Danach wurde die Atmosphäre auf $CO_2$ (10 bar) gewechselt und die Temperatur auf 100 °C gesenkt. Mit einer Dosiergeschwindigkeit von 2 mL/min wurden die restlichen 99 g der Alkylenoxidmischung, innerhalb von 1 h zugegeben. Der Verlauf der Reaktion konnte unter anderem mittels $CO_2$-Verbrauch beobachtet werden, wobei durch kontinuierliche Nachdosierung von $CO_2$ der Druck im Reaktor konstant gehalten wurde. Nach beendeter Alkylenoxidzugabe wurde noch 2 h nachgerührt um sicher zu stellen, dass alle Alkylenoxide abreagiert sind. Anschließend wurde der Reaktor entspannt und auf Raumtemperatur abgekühlt.

Um Nebenprodukte zu entfernen wurde das hergestellte Polyethercarbonatpolyol mittels Dünnschichtverdampfer bei 130 °C aufgereinigt. Die Ergebnisse der Viskositätsmessung und der Bestimmung der primären OH-Gruppen sind in Tabelle 1 dargestellt.

**Beispiel 3b: Herstellung eines Polyethercarbonatpolyols durch Terpolymerisation von $CO_2$, EO und PO mit einem EO/PO-Gewichtsverhältnis von 20/80 und einem $CO_2$-Druck von 10 bar**

Das Verfahren wurde entsprechend zu Beispiel 3a durchgeführt, wobei eine Alkylenoxidmischung mit einem EO/PO-Gewichtsverhältnis von 20/80 eingesetzt wurde.

**Beispiel 3c: Herstellung eines Polyethercarbonatpolyols durch Terpolymerisation von $CO_2$, EO und PO mit einem EO/PO-Gewichtsverhältnis von 10/90 und einem $CO_2$-Druck von 10 bar**

Das Verfahren wurde entsprechend zu Beispiel 3a durchgeführt, wobei eine Alkylenoxidmischung mit einem EO/PO-Gewichtsverhältnis von 10/90 eingesetzt wurde.

**Beispiel 4a: Herstellung eines Polyethercarbonatpolyols durch Terpolymerisation von $CO_2$, EO und PO mit einem EO/PO-Gewichtsverhältnis von 30/70 und einem $CO_2$-Druck von 25 bar**

($\alpha$) In einem 300 mL Druckreaktor mit Gas- und Flüssigkeitsdosierungseinrichtungen wurden 27,6 mg nicht aktivierter DMC-Katalysator in 30 g H-funktioneller Startersubstanz suspendiert. Die Suspension wurde unter Rühren (1000 U/min) auf 130 °C erhitzt und es wurde zusätzlich bei 50 mbar Druck über ein Tauchrohr ein Argon-Strom durchgeleitet.
($\beta$) Anschließend wurde 2,5 bar Argon aufgepresst und der Katalysator aktiviert. Hierfür wurden Pulsartig (5 mL/min) 3 x 3 g der Alkylenoxidmischung zugegeben. Zwischen den Pulsen wurde jeweils 10 min gewartet, bis die Alkylenoxide vollständig abreagiert haben.
($\gamma$) Danach wurde die Atmosphäre auf $CO_2$ (25 bar) gewechselt und die Temperatur auf 100 °C gesenkt. Mit einer Dosiergeschwindigkeit von 2 mL/min wurden die restlichen 99 g der Alkylenoxidmischung, innerhalb von 1 h zugegeben. Der Verlauf der Reaktion konnte unter anderem mittels $CO_2$-Verbrauch beobachtet werden, wobei durch kontinuierliche Nachdosierung von $CO_2$ der Druck im Reaktor konstant gehalten wurde. Nach beendeter Alkylenoxidzugabe wurde noch 2 h nachgerührt um sicher zu stellen, dass alle Alkylenoxide abreagiert sind. Anschließend wurde der Reaktor entspannt und auf Raumtemperatur abgekühlt.

Um Nebenprodukte zu entfernen wurde das hergestellte Polyethercarbonatpolyol mittels Dünnschichtverdampfer bei 130 °C aufgereinigt. Die Ergebnisse der Viskositätsmessung und der Bestimmung der primären OH-Gruppen sind in Tabelle 1 dargestellt.

**Beispiel 4b: Herstellung eines Polyethercarbonatpolyols durch Terpolymerisation von $CO_2$, EO und PO mit einem EO/PO-Gewichtsverhältnis von 20/80 und einem $CO_2$-Druck von 25 bar**

Das Verfahren wurde entsprechend zu Beispiel 3a durchgeführt, wobei eine Alkylenoxidmischung mit einem EO/PO-Gewichtsverhältnis von 20/80 eingesetzt wurde.

**Beispiel 4c: Herstellung eines Polyethercarbonatpolyols durch Terpolymerisation von $CO_2$, EO und PO mit einem EO/PO-Gewichtsverhältnis von 10/90 und einem $CO_2$-Druck von 25 bar**

Das Verfahren wurde entsprechend zu Beispiel 3a durchgeführt, wobei eine Alkylenoxidmischung mit einem EO/PO-Gewichtsverhältnis von 10/90 eingesetzt wurde.

**Tabelle 1:**

| Beispiel | $CO_2$-Druck [bar] | Anteil an Ethylenoxid am eingesetzten Alkylenoxid [Gew.%] | COz-Gehalt [Gew.%[1]] | Primäre OH-Gruppen [%] | Viskosität [mPas*s] |
|---|---|---|---|---|---|
| 1a* | 0 | 30 | 0 | 18,6 | 187,6 |
| 1b* | 0 | 20 | 0 | 17,3 | 174,3 |
| 1c* | 0 | 10 | 0 | 14,5 | 177,2 |
| 2a | 5 | 30 | 2,9 | 24,2 | 209,6 |
| 2b | 5 | 20 | 3,0 | 21,3 | 191,1 |

(fortgesetzt)

| Beispiel | $CO_2$-Druck [bar] | Anteil an Ethylenoxid am eingesetzten Alkylenoxid [Gew.%] | COz-Gehalt [Gew.%[1]] | Primäre OH-Gruppen [%] | Viskosität [mPas*s] |
|---|---|---|---|---|---|
| 2c | 5 | 10 | 3,8 | 19,3 | 256,9 |
| 3a | 10 | 30 | 6,3 | 27,0 | 325,4 |
| 3b | 10 | 20 | 6,1 | 24,2 | 297,1 |
| 3c | 10 | 10 | 6,9 | 20,0 | 366,5 |
| 4a | 25 | 30 | 9,7 | 32,0 | 469,5 |
| 4b | 25 | 20 | 10,5 | 26,0 | 530,9 |
| 4c | 25 | 10 | 11,3 | 20,6 | 622,9 |
| * Vergleichsbeispiel<br>[1] Gew.-% bezogen auf das Gesamtgewicht des Polyethercarbonatpolyols | | | | | |

Die Ergebnisse zeigen, dass bei der erfindungsgemäßen Anlagerung eines Gemisches aus mindestens zwei Alkylenoxiden, enthaltend Ethylenoxid in einem Gewichtsverhältnis von 5 bis 50 Gew.-%, bezogen auf das Gesamtgewicht des eingesetzten Alkylenoxids, unter Kohlendioxid-haltiger Atmosphäre an eine H-funktionelle Startersubstanz zu einem verbesserten Einbau von primären OH-Gruppen führt.

## Patentansprüche

1. Verfahren zur Herstellung von Polyethercarbonatpolyolen durch Anlagerung von Alkylenoxid und Kohlendioxid an eine H-funktionelle Startersubstanz in Anwesenheit eines DMC-Katalysators oder eines Metallkomplexkatalysators auf Basis der Metalle Cobalt und/oder Zink, wobei
(γ) Alkylenoxid und Kohlendioxid an eine H-funktionelle Startersubstanz in einem Reaktor in Anwesenheit eines DMC-Katalysators oder eines Metallkomplexkatalysators auf Basis der Metalle Cobalt und/oder Zink angelagert werden,
**dadurch gekennzeichnet, dass** das Alkylenoxid einen Anteil von 5 bis 50 Gew.-% Ethylenoxid, bezogen auf das Gesamtgewicht des eingesetzten Alkylenoxids, enthält und die Anlagerung unter Kohlendioxid-haltiger Atmosphäre durchgeführt wird.

2. Verfahren gemäß Anspruch 1, **dadurch gekennzeichnet, dass** vor Schritt (γ)

   (α) H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der Katalysator der H-funktionellen Startersubstanz oder dem Suspensionsmittel vor oder nach der Trocknung zugesetzt wird,
   (β) gegebenenfalls zur Aktivierung des DMC-Katalysators eine Teilmenge (bezogen auf die Gesamtmenge der bei der Aktivierung und Terpolymerisation eingesetzten Menge an Alkylenoxid) des Alkylenoxids zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann.

3. Verfahren gemäß Anspruch 2, **dadurch gekennzeichnet, dass** als Suspensionsmittel 4-Methyl-2-oxo-1,3-dioxolan, 1,3-Dioxolan-2-on, Toluol, Xylol, Ethylbenzol, Chlorbenzol, Dichlorbenzol oder eine Mischung zweier oder mehrerer dieser Suspensionsmittel eingesetzt wird.

4. Verfahren gemäß einem der Ansprüche 1 bis 3, **dadurch gekennzeichnet, dass** in Schritt (γ) Ethylenoxid in einem Gewichtsverhältnis von 5 bis 40 Gew.-%, insbesondere 12 bis 32 Gew.-%, bezogen auf das Gesamtgewicht des eingesetzten Alkylenoxids, enthält.

5. Verfahren gemäß einem der Ansprüche 1 bis 4, **dadurch gekennzeichnet, dass** in Schritt (γ) Kohlendioxid mit

einem Druck von 2,5 bis 100 bar, besonders bevorzugt 4 bis 50 bar, insbesondere 8 bis 30 bar, eingesetzt wird.

**6.** Verfahren gemäß einem der Ansprüche 1 bis 5, **dadurch gekennzeichnet, dass** als H-funktionelle Startsubstanz eine oder mehrere Verbindungen ausgewählt aus der Gruppe bestehend aus Ethylenglykol, Propylenglykol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht $M_n$ im Bereich von 150 bis 4500 g/mol und einer Funktionalität von 2 bis 3 eingesetzt werden.

**7.** Polyethercarbonatpolyol, hergestellt nach einem Verfahren gemäß einem der Ansprüche 1 bis 6.

**8.** Verwendung eines Polyethercarbonatpolyols gemäß Anspruch 7 für die Herstellung von Polyurethan-Kunststoffen, insbesondere Polyurethan-Schaumstoffen.

Europäisches Patentamt
European Patent Office
Office européen des brevets

# EUROPÄISCHER RECHERCHENBERICHT

Nummer der Anmeldung
EP 20 16 1952

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 530 101 A1 (BAYER MATERIALSCIENCE AG [DE]) 5. Dezember 2012 (2012-12-05)<br>* Absätze [0001], [0006], [0010] - [0011], [0045], [0050], [0084], [0086] - [0089]; Ansprüche 1-16; Beispiele A1-3, A1-4,A1-5 *<br>----- | 1-8 | INV.<br>C08G18/48<br>C08G64/18<br>C08G64/34<br>C08G65/26 |
| X,D | WO 2014/072336 A1 (BAYER MATERIALSCIENCE AG [DE]) 15. Mai 2014 (2014-05-15)<br>* Seite 1, Zeilen 2-4 *<br>* Seite 2, Zeile 26 - Seite 3, Zeile 16 *<br>* Seiten 9-12 *<br>* Beispiel 1 *<br>----- | 1-8 | |
| | | | RECHERCHIERTE SACHGEBIETE (IPC) |
| | | | C08G<br>C09J |

Der vorliegende Recherchenbericht wurde für alle Patentansprüche erstellt

1

| Recherchenort | Abschlußdatum der Recherche | Prüfer |
|---|---|---|
| Den Haag | 13. Mai 2020 | Bezard, Stéphane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 16 1952

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-05-2020

| Im Recherchenbericht angeführtes Patentdokument | Datum der Veröffentlichung | Mitglied(er) der Patentfamilie | Datum der Veröffentlichung |
|---|---|---|---|
| EP 2530101 A1 | 05-12-2012 | BR 112013030898 A2 | 06-12-2016 |
| | | CA 2837624 A1 | 06-12-2012 |
| | | CN 103703052 A | 02-04-2014 |
| | | EP 2530101 A1 | 05-12-2012 |
| | | EP 2714770 A1 | 09-04-2014 |
| | | ES 2606000 T3 | 17-03-2017 |
| | | JP 2014515429 A | 30-06-2014 |
| | | KR 20140035455 A | 21-03-2014 |
| | | SG 195061 A1 | 30-12-2013 |
| | | US 2014107245 A1 | 17-04-2014 |
| | | US 2019002634 A1 | 03-01-2019 |
| | | WO 2012163944 A1 | 06-12-2012 |
| WO 2014072336 A1 | 15-05-2014 | BR 112015010448 A2 | 15-05-2018 |
| | | CA 2890447 A1 | 15-05-2014 |
| | | CN 104769008 A | 08-07-2015 |
| | | EP 2917264 A1 | 16-09-2015 |
| | | JP 6239637 B2 | 29-11-2017 |
| | | JP 2015533915 A | 26-11-2015 |
| | | KR 20150084820 A | 22-07-2015 |
| | | SG 11201502736Y A | 28-05-2015 |
| | | US 2015299374 A1 | 22-10-2015 |
| | | US 2017158804 A1 | 08-06-2017 |
| | | WO 2014072336 A1 | 15-05-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2001044347 A
- WO 2008058913 A
- WO 2014072336 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- EP 1359177 A
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931